**Europäisches Patentamt**

**European Patent Office**

**Office européen des brevets**

(19)

(11) **EP 1 298 481 A2**

(12) **EUROPÄISCHE PATENTANMELDUNG**

(43) Veröffentlichungstag:
**02.04.2003 Patentblatt 2003/14**

(51) Int Cl.⁷: $G02B\ 23/12$, $H04N\ 5/33$

(21) Anmeldenummer: **02020996.1**

(22) Anmeldetag: **20.09.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **24.09.2001 DE 10146959**

(71) Anmelder: **Hella KG Hueck & Co.**
**59552 Lippstadt (DE)**

(72) Erfinder:
• **Abel, Björn**
**59590 Geseke (DE)**
• **Burg, Michael**
**59557 Lippstadt (DE)**

(54) **Nachtsichtvorrichtung für Fahrzeuge**

(57) Die Erfindung betrifft eine Nachtsichtvorrichtung für Fahrzeuge mit einer Strahlungseinrichtung zur Erzeugung einer infraroten Strahlung, mit einer Detektiereinrichtung zur Aufnahme eines infraroten Bildes, wobei die Detektiereinrichtung mit der Strahlungseinrichtung zusammenwirkt, und mit einer Anzeigeeinrichtung zur Visualisierung des infraroten Bildes für den Fahrzeugführer, wobei die Strahlungseinrichtung eine Halbleiterstrahlungsquelle aufweist, die derart ansteuerbar ist, dass die infrarote Strahlung zeitdiskret abgestrahlt wird.

Figur 1

EP 1 298 481 A2

**Beschreibung**

Die Erfindung betrifft eine Nachtsichtvorrichtung für Fahrzeuge mit einer Strahlungseinrichtung zur Erzeugung einer infraroten Strahlung, mit einer Detektiereinrichtung zur Aufnahme eines infraroten Bildes, wobei die Detektiereinrichtung mit der Strahlungseinrichtung zusammenwirkt, und mit einer Anzeigeeinrichtung zur Visualisierung des infraroten Bildes für den Fahrzeugführer.

Aus der EP 0 479 634 B1 ist eine Strahlungseinrichtung bestehend aus einer Lichtquelle, die ein breitbandiges Spektrum hat und die im sichtbaren und nahinfraroten Spektralbereich abstrahlt. Eine Nachtsichtvorrichtung für Fahrzeuge beruht auf einem Scheinwerfersystem. Einer Lichtquelle des Scheinwerfers ist ein Filter in Lichtaustrittsrichtung vorgelagert und bewirkt in einer das Lichtbündel erfassenden Betriebsstellung, dass ausschließlich der infrarote Strahlungsanteil des Lichtbündels durchgelassen und in Richtung eines vor dem Fahrzeug liegenden Sehfeldes abgestrahlt wird. Ein dadurch entstehendes infrarotes Bild des vor dem Fahrzeug liegenden Sehfeldes kann durch eine Detektiereinrichtung, die vorzugsweise als CCD-Kamera ausgebildet, aufgenommen, weiterverarbeitet und mittels einer nachgeordneten Anzeigeeinrichtung, die vorzugsweise im Bereich der Windschutzscheibe angeordnet ist, visualisiert werden. Dadurch kann dem Fahrzeugführer ein erweitertes Sehfeld verschafft werden, dessen Tiefe größer ist als das durch die Lichtquelle im sichtbaren Bereich generierte Sehfeld.

Nachteilig an der bekannten Nachtsichtvorrichtung ist, dass zusätzlich zu der Lichtquelle ein Filter notwendig ist, der die infrarote Strahlung zur Weiterleitung in Richtung des Sehfeldes herausfiltert. Zwar ist es bekannt, als Alternative Leuchtdioden mit einem schmalen Spektralspektrum einzusetzen, so dass eine zusätzliche Filterung nicht erforderlich ist. Solche bekannten Leuchtdioden werden üblicherweise in einem kontinuierlichen Betrieb mit einer konstanten Abstrahlleistung eingesetzt.

Aufgabe der vorliegenden Erfindung ist es, eine Nachtsichtvorrichtung für Fahrzeuge derart weiterzubilden, dass die Effektivität der Strahlungseinrichtung verbessert wird.

Zur Lösung dieser Aufgabe ist die erfindungsgemäße Nachtsichtvorrichtung dadurch gekennzeichnet, dass die Strahlungseinrichtung eine Halbleiterstrahlungsquelle aufweist, die derart ansteuerbar ist, dass die infrarote Strahlung zeitdiskret abgestrahlt wird.

Der besondere Vorteil der erfindungsgemäße besteht darin, dass durch den zeitdiskreten Verlauf des Strahlungssignals eine zeitliche Gewichtung der Strahlungsleistung ermöglicht wird. Diese zeitliche Gewichtung bewirkt eine zeitliche Konzentration eines Strahlungsleistungsmaximums, so dass trotz eines relativ hohen Maximalwertes des Strahlungssignals eine Verringerung des Strahlungssignalsmittelwertes eintritt. Vorteilhaft ergibt sich hierdurch ein im Vergleich zum kontinuierlichen Betrieb höhere Spitzenstrahlungsleistung, die zur Erzeugung eines infraroten Bildes genutzt werden kann. Auf der anderen Seite ergibt sich daraus eine wesentliche Verringerung des Strahlungsleistungsmittelwertes, so dass die Gesundheitsgefährdung von dem Fahrzeug entgegenkommenden Personen infolge der Strahlung auf das Auge verringert werden kann.

Nach einer besonderen Ausführungsform der Erfindung ist die Halbleiterstrahlungsquelle derart ansteuerbar, dass die infrarote Strahlung in Form eines periodischen Strahlungsimpulses abgestrahlt wird. Vorteilhaft arbeitet die Strahlungseinrichtung in einem Pulsbetrieb, der durch entsprechende Ansteuerung der Halbleiterstrahlungsquelle auf einfache Weise herstellbar ist.

Nach einer Weiterbildung der Erfindung ist die Impulsdauer des Strahlungsimpulses kleiner als 1/10 der Periodendauer, so dass die Strahlungsenergie konzentriert in einem relativ kurzen Zeitintervall emittiert wird. Vorteilhaft kann hierdurch die mittlere Strahlungsleistung wesentlich reduziert werden, was jedoch keine Beeinträchtigung hinsichtlich der Qualität des infraroten Bildes bedeutet.

Nach einer Weiterbildung der Erfindung ist die Halbleiterstrahlungsquelle synchron mit der Detektiereinheit ansteuerbar, so dass nur in dem Zeitintervall der Strahlungsabgabe eine Detektion derselben erfolgen kann.

Nach einer Weiterbildung der Erfindung ist ein zusätzlicher Infrarotsensor vorgesehen, der die infrarote Strahlung eine entgegenkommenden Fahrzeugs aufnimmt. In Abhängigkeit von dem Vorliegen eines solchen infraroten Strahlungssignals kann die Ansteuerung der Halbleiterstrahlungsquelle einerseits und der Detektiereinrichtung andererseits so modifiziert werden, dass der nächste Strahlungsimpuls zeitlich versetzt abgegeben bzw. detektiert wird. Auf diese Weise kann verhindert werden, dass das von dem entgegenkommende Fahrzeug ausgesandte infrarote Strahlungssignal das Messergebnis der Detektiereinrichtung verfälscht bzw. stört.

Nach einer Weiterbildung der Erfindung kann in Abhängigkeit des Vorliegens eines infraroten Strahlungssignals eines entgegenkommenden Fahrzeugs das von der Halbleiterstrahlungsquelle ausgesandte Pulsmuster verändert werden. Beispielsweise kann der Infrarotsensor, der die infrarote Strahlung des entgegenkommenden Fahrzeugs detektiert, mit einer Steuereinheit verbunden sein, die das Pulsmuster des entgegenkommenden Fahrzeugs analysiert und in Abhängigkeit davon das Pulsmuster der Halbleiterstrahlungsquelle verändert, so dass keine gegenseitige Störung eintreten kann.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:

Figur 1    ein Blockschaltbild einer Nachtsichtvorrichtung,

Figur 2    ein Strahlungsspektrum der Halbleiterstrahlungsquelle und

Figur 3    ein Puls-Diagramm.

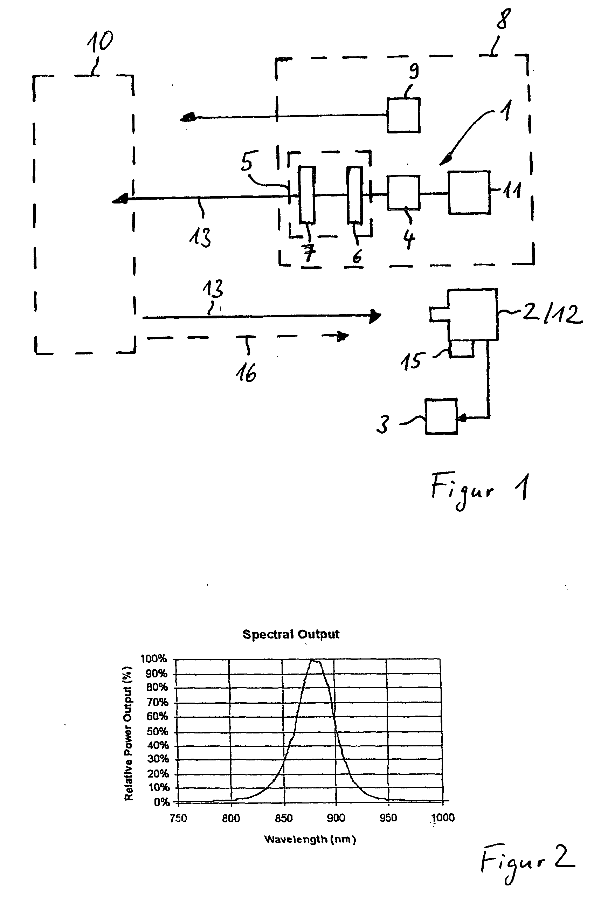

Eine Nachtsichtvorrichtung ist in Figur 1 dargestellt und besteht im Wesentlichen aus einer Strahlungseinrichtung 1, einer Detektiereinrichtung 2 und einer Anzeigeeinrichtung 3.

Die Strahlungseinrichtung 1 besteht zum einen aus einer Halbleiterstrahlungsquelle 4, die als Infrarotdiode (IRED) oder als Infrarot-Laserdiode (IR-Laserdiode) ausgebildet sein kann. Zum anderen weist die Strahlungseinrichtung 1 eine Sammeloptik 5 auf, die zum einen aus einer Fresnellinse 6 zur Bündelung des von der Halbleiterstrahlungsquelle 4 ausgesandten Strahlungsbündels und einer bifokalen Linse 7 besteht, die einer weitere Bündelung und horizontale Streckung zur Bildung einer gewünschten Strahlverteilung bewirkt. Die Halbleiterstrahlungsquelle 4 weist vorzugsweise eine Mehrzahl von auf einem gemeinsamen nicht dargestellten Träger angeordnete Infrarotdioden auf. Auf diese Weise hat die Halbleiterstrahlungsquelle 4 einen kompakten Aufbau.

Die Strahlungseinrichtung 1 ist in einem Scheinwerfer 8 integriert, der eine weitere Lichtquelle 9 zur Generierung eines sichtbaren Lichtbündels aufweist. Die Lichtquelle 9 kann zur Bildung einer Lichtfunktion, insbesondere eines Abblendlichtes und/oder Fernlichtes eingesetzt werden. Die Lichtquelle 9 dient somit zur Ausleuchtung eines vor dem Fahrzeug liegenden Sichtfeldes 10.

Zur Vergrößerung des Sichtfeldes 10 kann die Nachtsichtvorrichtung zugeschaltet werden, so dass sich insbesondere das Sichtfeld 10 in der Tiefe vergrößert. Zu diesem Zweck ist eine Ansteuereinheit 11 vorgesehen, die zum einen die Halbleiterstrahlungsquelle 4 und zum anderen eine CCD-Kamera 12 der Detektiereinrichtung 2 andererseits synchron ansteuert. Die CCD-Kamera 12 kann ortsfern von dem Scheinwerfer 8 angeordnet sein.

Wie aus Figur 2 zu ersehen ist, ist die Halbleiterstrahlungsquelle 4 derart ausgebildet, dass sie eine Strahlung in einem Wellenlängenbereich zwischen 800 bis 950 nm abstrahlt. Das Maximum der Strahlungsleistung liegt etwa in einem Bereich von 870 bis 880 nm. Alternativ sind auch Halbleiterstrahlungsquellen 4 einsetzbar, deren Maximum der Strahlungsleistung im bereich von 800 bis 950 nm liegt.

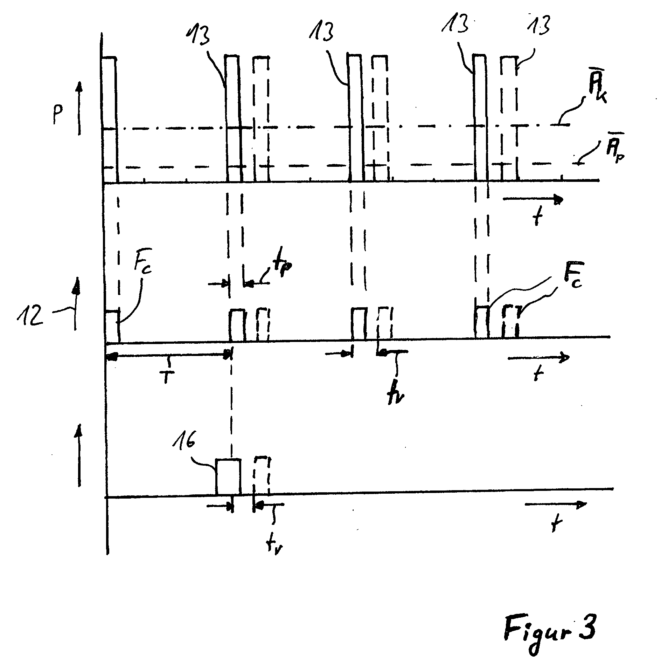

Figur 3 zeigt, dass die Halbleiterstrahlungsquelle 4 die infrarote Strahlung in Form von periodischen Strahlungsimpulsen 13 abgibt. Die Strahlungsimpulse 13 werden mit einer Frequenz in einem Bereich zwischen 20 und 200 Hz durch die Ansteuereinheit 11 angesteuert. Die Strahlungsimpulse werden zeitdiskret angesteuert, insbesondere im gepulsten Betrieb, siehe oberstes Zeitdiagramm, demgemäss die Leistung P über die Zeit t dargestellt ist. Das Verhältnis der Pulszeit $t_p$ bezogen zur Periodendauer T liegt in einem Bereich von 1 zu 20. Die Pulszeit kann in einem Bereich von 100 μs und 10.000 μs liegen. Als Folge davon ist die mittlere Strahlungsleistung $\bar{A}_p$ im Pulsbetrieb wesentlich kleiner als die mittlere $\bar{A}_k$ Strahlungsleistung im kontinuierlichen Betrieb. Im vorliegenden Ausführungsbeispiel beträgt die mittlere Strahlungsleistung im kontinuierlichen Betrieb das zehnfache von der mittleren Strahlungsleistung $\bar{A}_p$ im Pulsbetrieb.

Da die CCD-Kamera 12 synchron zu dieser Pulszeit $t_p$ mittels eines Steuersignals $F_c$ angesteuert wird, erfolgt die Detektion mit einer wesentlich höheren Strahlungsleistung. Die Qualität des Messergebnisses ist somit verbessert. Gleichzeitig kann die Strahlungsbelastung eines entgegenkommenden Fahrzeugführers verringert werden, da die mittlere Strahlungsleistung $\bar{A}_p$ wesentlich verringert ist. Das mittlere Zeitdiagramm in Figur 3 zeigt die Ansteuerung der CCD-Kamera 12 mit einem Ansteuerungssignal $F_c$ über die Zeit t. Die Belichtungszeit der Kamera 12 ist auf die Pulszeit $t_p$ beschränkt.

Die CCD-Kamera 12 bzw. CMOS-Kamera 12 kann die infrarote Strahlung 14 des Sichtfeldes 10 detektieren zur Bildung eines infraroten Bildes, das in der Anzeigeeinrichtung 3 dem Fahrer des Fahrzeugs dargestellt wird. Die Anzeigeeinrichtung 3 kann beispielsweise in der Windschutzscheibe des Fahrzeugs integriert sein.

Ein Infrarotsensor 15 kann im Bereich der Kamera 12 bzw. in der Kamera 12 integriert angeordnet sein, damit ein infrarotes Störsignal 16 eines im Bereich des Sichtfeldes 10 entgegenkommenden Fahrzeugs detektiert werden kann. Das Strahlungssignal 16, das sich störend auf das Messergebnis auswirkt, wird durch den Infrarotsensor 15 detektiert und der Ansteuereinheit 11 weitergeleitet. Als Reaktion auf dieses Störstrahlungssignal 16 erfolgt eine Phasenverschiebung der Folge der Strahlungsimpulse 13, so dass der nächste Strahlungsimpuls 13 (siehe gestrichelt dargestellte Impulse) erst angesteuert wird, wenn das Störstrahlungssignal 16 beendet ist. Die folgenden Strahlungsimpulse 13 werden dann entsprechend der Periodendauer T aufeinanderfolgend angesteuert. Auf diese Weise wird eine gleichzeitige Abstrahlung des Strahlungsimpulses 13 und des Störstrahlungssignals 16 verhindert. Das unterste Zeitdiagramm in Figur 3 zeigt das Auftreten des Störstrahlungssignals 16 über die Zeit t.

Alternativ kann auch einmalig der auf das Störstrahlungssignal folgende Strahlungsimpuls 13 zeitlich verschoben werden. Alternativ kann auch die Pulsdauer oder die Pulshöhe oder die Pulsfrequenz der Folge der Strahlungsimpulse 13 geändert werden. Bei Vorliegen mehrerer in kurzen Zeitabschnitten aufeinander folgenden Störstrahlungssignalen 16 kann das Pulsmuster des Störstrahlungssignals 16 erkannt werden und als Reaktion darauf ein solches Muster von Strahlungsimpulsen 13 generiert werden, dass keine gleichzeitige Abstrahlung der Strahlungsimpulse 13 und der Störstrahlungssignale 16 auftritt.

Wie aus Figur 3 zu ersehe ist, bewirkt das Auftreten des Störstrahlungssignals 16 eine zeitliche Verschiebung $t_v$ des nächstfolgenden Strahlungsimpulses 13, wobei die folgenden Strahlungsimpulse 13 mit der konstanten vorgegebenen Frequenz erzeugt werden. Durch die synchrone Ansteuerung der CCD-Kamera 12 verschiebt sich auch das Belichtungsintervall derselben um die Verzögerungszeit $t_v$. Vorteilhaft ergibt sich hierdurch eine Störungsunterdrückung von einer Störstrahlung 16.

Die Erfindung ist nicht auf das vorliegende Ausführungsbeispiel beschränkt. Die von der Halbleiterstrahlungsquelle 4 emittierte infrarote Strahlung kann auch einen anderen Verlauf haben. Wesentlich ist, dass eine Überhöhung der abgegebenen Infrarotstrahlung erfolgt, die synchron zu einer Belichtungszeit der CCD-Kamera 12 ist. Durch diese zeitweise Überhöhung der ausgesendeten Strahlung können vorteilhaft die negativen Auswirkungen von Störquellen reduziert werden.

## Patentansprüche

1. Nachtsichtvorrichtung für Fahrzeuge mit einer Strahlungseinrichtung zur Erzeugung einer infraroten Strahlung, mit einer Detektiereinrichtung zur Aufnahme eines infraroten Bildes, wobei die Detektiereinrichtung mit der Strahlungseinrichtung zusammenwirkt, und mit einer Anzeigeeinrichtung zur Visualisierung des infraroten Bildes für den Fahrzeugführer, **dadurch gekennzeichnet, dass** die Strahlungseinrichtung (1) eine Halbleiterstrahlungsquelle (4) aufweist, die derart ansteuerbar ist, dass die infrarote Strahlung (13) zeitdiskret abgestrahlt wird.

2. Nachtsichtvorrichtung nach Anspruch 1, **dadurch gekennzeichnet, dass** die Halbleiterstrahlungsquelle (4) derart ansteuerbar ist, dass die infrarote Strahlung (13) in Form eines periodischen Strahlungsimpulses (13) abgestrahlt wird.

3. Nachtsichtvorrichtung nach Anspruch 1 oder 2, **dadurch gekennzeichnet, dass** die Impulsdauer ($t_p$) des Strahlungsimpulses (13) weniger als 1/10, vorzugsweise 1/20, der Periodendauer ($T$) beträgt und dass die mittlere Strahlungsleistung ($\bar{A}_P$) etwa 1/10 der mittleren Strahlungsleistung ($\bar{A}_K$) im kontinuierlichen Betrieb beträgt.

4. Nachtsichtvorrichtung nach einem der Ansprüche 1 bis 3, **dadurch gekennzeichnet, dass** die Halbleiterstrahlungsquelle (4) derart angesteuert wird, dass die Folge von Strahlungsimpulsen (13) mit einer konstanten Frequenz in einem Bereich zwischen 20 Hz und 200 Hz abgestrahlt wird.

5. Nachtsichtvorrichtung nach einem der Ansprüche 1 bis 4, **dadurch gekennzeichnet, dass** die Halbleiterstrahlungsquelle (4) und die Detektiereinheit (2) synchron ansteuerbar sind, derart, dass zeitgleich mit der Abstrahlung der Strahlungsimpulse (13) die Detektiereinrichtung (2) das infrarote Bild des vor dem Fahrzeug liegenden Sichtfeldes (10) detektiert.

6. Nachtsichtvorrichtung nach einem der Ansprüche 1 bis 5, **dadurch gekennzeichnet, dass** die Halbleiterstrahlungsquelle (4) in einem Scheinwerfer (8) enthaltend mindestens eine Lichtquelle (9) zur Erzeugung einer Lichtfunktion integriert ist.

7. Nachtsichtvorrichtung nach einem der Ansprüche 1 bis 6, **dadurch gekennzeichnet, dass** ein Infrarotsensor (15) vorgesehen ist zur Detektion eines von einem entgegenkommenden weiteren Fahrzeug erzeugt infraroten Störstrahlungssignals (16) und dass in Abhängigkeit von dem Störstrahlungssignal (16) die Halbleiterstrahlungsquelle (4) derart angesteuert wird, dass eine zeitliche Verschiebung der Folge der Strahlungsimpulse (13) erfolgt.

8. Nachtsichtvorrichtung nach einem der Ansprüche 1 bis 7, **dadurch gekennzeichnet, dass** in Abhängigkeit von dem Vorliegen des Störstrahlungssingals (16) des entgegenkommendes Fahrzeugs das Pulsmuster und/oder die Pulsdauer ($t_p$) und/oder die Pulshöhe ($\bar{A}_p$) und/oder die Pulsfrequenz (1/T) der Folge von Strahlungsimpulsen (13) geändert wird.

9. Nachtsichtvorrichtung nach einem der Ansprüche 1 bis 8, **dadurch gekennzeichnet, dass** die Halbleiterstrahlungsquelle (4) als eine einzelne oder eine Mehrzahl von Infrarot-Laserdioden oder als eine einzelne oder eine Mehrzahl von Infrarotdioden ausgebildet ist.

10. Nachtsichtvorrichtung nach einem der Ansprüche 1 bis 9, **dadurch gekennzeichnet, dass** der Halbleiterstrahlungsquelle (4) eine Sammeloptik (5) vorgelagert ist.

Figur 1

Spectral Output

Figur 2

Figur 3